# EUROPÄISCHE PATENTSCHRIFT

(11) **EP 0 902 880 B1**
(45) Veröffentlichungstag und Bekanntmachung des Hinweises auf die Patenterteilung: **23.10.2002**
(21) Anmeldenummer: 97922949.9
(22) Anmeldetag: 02.05.1997
(51) Int. Cl.: G01D 5/14, G01D 5/16, G01P 1/04, G01P 3/487, F16D 1/08, F16B 21/20, G01B 7/30

(54) **MAGNETRING**
MAGNETIC RING
TORE MAGNETIQUE

(30) Priorität: 05.06.1996 DE 19622547; 26.06.1996 DE 19625478
(43) Veröffentlichungstag der Anmeldung: 24.03.1999
(73) Patentinhaber: Valeo Auto-Electric Wischer und Motoren GmbH, 74321 Bietigheim-Bissingen (DE)
(72) Erfinder: BRUHN, Rainer, D-74379 Ingersheim (DE); SCHULLER, Norbert, D-74172 Neckarsulm (DE)
(74) Vertreter: Dreiss, Fuhlendorf, Steimle & Becker
(86) Internationale Anmeldenummer: EP9702262
(87) Internationale Veröffentlichungsnummer: WO97046850

(56) Entgegenhaltungen:
- WO-A-85/04934
- DE-A- 3 622 312
- DE-A- 3 732 958
- US-A- 5 081 756

## Beschreibung

Die Erfindung bezieht sich auf einen magnetfeldempfindlichen Sensor mit Magnetring als Signalgeber. Die Erfindung betrifft außerdem ein Verfahren zum Herstellen eines magnetfeldempfindlichen Sensors mit Magnetring.

Derartige Magnetringe werden z.B. auf Antriebswellen von Elektromotoren aufgesetzt, um deren Drehzahl bzw. die Winkelstellung zu erfassen. Dazu muss der Magnetring verdrehsicher auf der Welle gehalten werden. Er kann aber nicht unmittelbar auf die Welle aufgepresst werden, da das Magnetmaterial spröde ist und beim Aufpressen platzen würde. Es sind daher zusätzliche Befestigungselemente notwendig.

In der DE 37 32 958 C2 wird z.B. vorgeschlagen, ein Befestigungselement zu wählen, dass aus einer im Profil T-förmigen Kunststoffhülse besteht, die auf ihrer in Achsrichtung verlaufenden zylindrischen Umfangsfläche und auf ihrer in Radialrichtung sich erstreckenden Stirnfläche den Magnetring zusammen mit einer Rückschlusshülse trägt. Um diese Einheit auf der Welle zu befestigen, werden die Kunststoffhülse, die Rückschlusshülse und der Magnetring zusammen mit der Welle mit Kunststoff umspritzt. Es ist ohne weiteres ersichtlich, dass diese Vorgehensweise recht aufwändig ist.

Aus der DE-A-36 22 312 ist eine Gummirolle mit einer ähnlichen Befestigungsringscheibe bekannt, die in der Gummirolle einvulkanisiert ist.

Aus der DE-OS 3622312 ist es bekannt, zur Verbesserung der reibschlüssigen Verbindung einer Kunststoffrolle auf einer Welle ein elastisch verformbares Kupplungselement einzusetzen, welches in die Kunststoffrolle einvulkanisiert ist. Das Kupplungselement besteht aus einer Federringscheibe, die mit radialen Schlitzen versehen ist, wobei Zungen entstehen, deren freie Enden zum Scheibenzentrum gerichtet sind. Die Enden der Zungen liegen im spannungsfreien Zustand der Federringscheibe auf einem Kreis, dessen Durchmesser kleiner ist als der Durchmesser der Welle.

Aus der US-A-5 081 756 ist ferner ein Magnetsensor mit den Merkmalen des Oberbegriffs des Anspruchs 1 bekannt, der in einer Magnetischen Kodiervorrichtung Verwendung findet.

Aufgabe der Erfindung ist es, den spröden Werkstoff des Magnetrings in einfacher Weise sicher auf der Welle zu halten.

Gemäß der Erfindung wird daher vorgeschlagen, dass die Magnetscheibe den Außenrand der Ringscheibe über dessen Kanten hinweg umfasst und dass die Ringscheibe radial nach innen aus der Umfassung durch die Magnetscheibe zumindest abschnittsweise hervorsteht und der freistehende Innenrand ein federndes Befestigungselement bildet.

Die nach innen vorstehenden Abschnitte der Ringscheibe bilden dabei federnde Halteelemente, die auf die Welle aufgepresst werden können, wodurch, wenn die Haltekräfte entsprechend groß gewählt werden, der Magnetring verdrehsicher und gegen Verschiebung gesichert auf der Welle gehalten wird. Die Einpresskräfte werden dabei in die Ringscheibe und nicht in den Magnetring eingeleitet. Vorzugsweise liegt der Innenrand der Scheibe bis auf zwei Ausnehmungen auf einem Kreis, wobei die Abschnitte des Innenrandes, die in den Ausnehmungen liegen, vom Magneten umfasst sind.

Die Ausnehmungen bilden Segmente, deren Mittelpunkte mit dem Mittelpunkt des Kreises übereinstimmen, der vom übrigen Innenrand gebildet wird.

Die bisher beschriebene Ausführung, bei der die nach innen vorstehenden Abschnitte der Ringscheibe segmentförmige Ausnehmungen aufweisen, ist gedacht für eine Stelle mit glatter Oberfläche. Die Ausnehmungen sind notwendig, damit die verbleibenden Stege sich in axialer Richtung verbiegen können.

Die Welle kann aber auch mit einigen Langskerben auf ihrem Umfang versehen werden, wobei die Kerben in das Material, wobei das herausgenommene Material als Längssteg entlang der Rille aufgeworfen wird. Wird nun die Ringscheibe auf diese Stege aufgepresst, so ergibt sich ein fester Halt, wobei außerdem darauf verzichtet werden kann, Segmentausnehmungen in der Ringscheibe vorzusehen.

Die Scheibe besteht vorzugsweise aus einem nicht magnetischen Metall, z.B. hartes Messing oder einer Beryllium-Legierung.

Ein derartiger Magnetring wird hergestellt, indem der Außenrand der Ringscheibe von magnetisierbarem Material über die Kanten des Außenrandes hinweg umspritzt und dieses anschließend magnetisiert wird, wobei die Umspritzung des Außenrands dermaßen erfolgt, und der abschnittsweise frei liegende Innenrand ein federndes Befestigungselement zur Befestigung des Magnetringes auf der Welle oder dem Stab bildet.

Die Erfindung soll im folgenden anhand der Figuren näher erläutert werden. Dabei zeigt
- Fig. 1: die Seitenansicht eines Magnetrings,
- Fig. 2: einen Schnitt entlang der Linie II-II der Fig. 1,
- Fig. 3: eine Draufsicht auf die Ringscheibe,
- Fig. 4: eine Welle mit Längskerben und
- Fig. 5: einen Schnitt entlang der Linie V-V.

Der Magnetring wird als Ganzes mit 1 bezeichnet. Er besteht aus einer Magnetscheibe 2 aus magnetischem bzw. magnetisierbarem Material, deren Außenrand 3 und deren Innenrand 4 jeweils Zylindermantelflächen bilden. Die Seitenflächen 5 und 6 sind flach.

Die Ringscheibe 10 besteht aus einem nicht magnetischen Metall, z.B. harten Messing, ihre Dicke ist deutlich geringer als die Dicke des Magnetringes 2. Ihr Außenrand 11 liegt auf einem Kreis, der im Durchmesser kleiner ist als der Durchmesser des Außenrandes des Magnetringes 2. Der Innenrand 12 liegt auf zwei gegenüberliegenden Winkelabschnitten 13, 14 auf einem Kreis mit einem Innendurchmesser, der kleiner ist als der Innendurchmesser des Magnetringes 2.

Der Innenrand 12 weist zwei nach außen gezogene Ausnehmungen 15, 16 auf, die einander gegenüberliegen und segmentförmig sind, wobei der Mittelpunkt der Segmente dem Mittelpunkt der Ringscheibe 10 entspricht. Der Innenrand 17, 18 der Ausnehmungen 15, 16 liegt auf einem Kreis, dessen Durchmesser größer ist als der Innendurchmesser des Magnetringes 2.

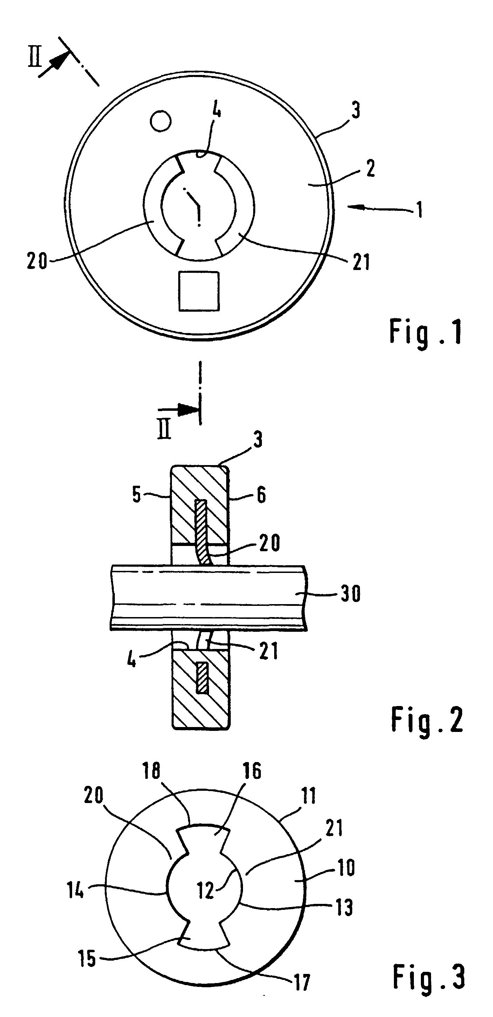

Die Haltescheibe 10 gemäß der Fig. 3 wird vom magnetisierbaren Material umspritzt, wobei der entsprechende Magnetring konzentrisch liegt zur Haltescheibe 10. Es entsteht ein Gebilde gemäß der Fig. 1 oder Fig. 2, wobei am Innenrand der Magnetscheibe 2 zwei metallische Lappen 20, 21 vorstehen, die als Klemmelemente wirken.

Nachdem das magnetische Material um die Haltescheibe 10 gespritzt worden ist, wird es aufmagnetisiert. Nun kann der so gebildete Magnetring auf eine Welle bzw. Stab 30 (siehe Fig. 2) geschoben werden. Die Klemmkräfte werden von der Haltescheibe aufgenommen und nicht unmittelbar in die Magnetscheibe 2 eingeleitet, wodurch verhindert wird, dass das magnetische Material aufplatzt. Durch entsprechende Wahl des Innendurchmessers des Innenrandes 13, 14 der Haltescheibe 10 können genügend große Klemmkräfte erzeugt werden, um den Magnetring 2 verdrehsicher auf der Welle 30 zu halten.

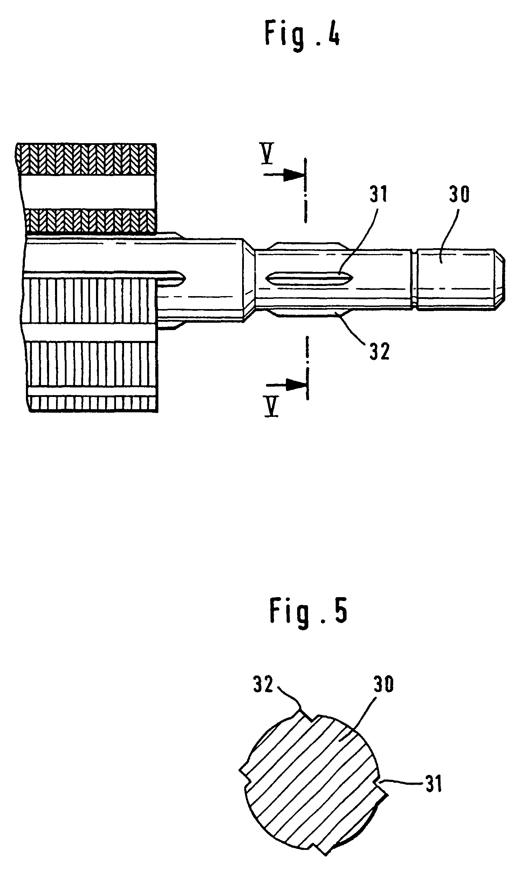

Die Figur 4 zeigt eine Welle 30, auf die der Magnetring aufgeschoben werden kann. Um einen sicheren Halt zu gewährleisten, ist die Welle 30 mit Längsschlitzen 31 versehen, zu denen parallel Längsstege 32 verlaufen.

Die Längsschlitze werden eingekerbt, wobei beim Kerbvorgang das Material im Schlitz nach außen gedrückt wird und zum Steg 32 ausgedrückt wird.

Die Figur 5 zeigt einen Querschnitt durch die Welle 30. Man erkennt, dass die Stege scharfkantig aus der Mantelfläche der Welle hervorragen.

Diese Methode wird unter anderem auch angewandt, um das Blechpaket des Rotors auf der Welle zu befestigen. Auf die so präparierten Welle, wird der Magnetring aufgeschoben, wobei in diesem Fall die Ringscheibe keine Ausnehmung aufzuweisen braucht, sondern einen durchgehenden Innenrand aufweist, der auf einem Kreis liegt.

## Patentansprüche

1. Magnetfeldempfihdlicher Sensor mit einem auf einer Welle oder einem Stab (30) befestigten Magnetring (1), mit einer Ringscheibe (10), deren Außenrand (11) von einer Magnetscheibe (2) umfasst ist und deren Innenrand (13, 14) zumindest abschnittsweise frei liegt, wobei der freiliegende Innenrand (13, 14) zumindest abschnittsweise auf einem Kreis liegt, dessen Durchmesser nur wenig kleiner ist als der Durchmesser des Stabes (30), **dadurch gekennzeichnet, dass** die Magnetscheibe (2) den Außenrand (11) der Ringscheibe (10) über dessen Kanten hinweg umfasst und dass die Ringscheibe (10) radial nach innen aus der Umfassung durch die Magnetscheibe (2) zumindest abschnittsweise hervorsteht und der freistehende Innenrand ein federndes Befestigungselement bildet.

2. Magnetfeldempfindlicher Sensor nach Anspruch 1, **dadurch gekennzeichnet, dass** der Innenrand (13,14) der Ringscheibe (10) bis auf zwei Ausnehmungen (15,16) einen Kreis bildet, wobei die Abschnitte (16,17) des Innenrandes, die in den Ausnehmungen (15,16) liegen, von der Magnetscheibe (2) umfasst sind.

3. Magnetfeldempfindlicher Sensor nach Anspruch 2, **dadurch gekennzeichnet, dass** die Ausnehmungen (15,16) Segmente bezogen auf den Mittelpunkt der Ringscheibe (10) bilden.

4. Magnetfeldempfindlicher Sensor nach einem der vorhergehenden Ansprüche, **dadurch gekennzeichnet, dass** die Ringscheibe (10) aus nicht magnetischem Material besteht.

5. Magnetfeldempfindlicher Sensor nach Anspruch 4, **dadurch gekennzeichnet, dass** die Ringscheibe (10) aus hartem Messing oder einer Beryllium-Legierung besteht.

6. Magnetfeldempfindlicher Sensor nach Anspruch 1, **dadurch gekennzeichnet, dass** der Innenrand der Ringscheibe (10) auf einem Kreis liegt und die Welle (30), auf die der Magnetring aufgepresst wird, mit Längsstegen (32) versehen sind, die aus dem Material der Welle (30) herausgedrückt sind.

7. Verfahren zum Herstellen eines magnetfeldempfindlichen Sensors nach einem der Ansprüche 1 bis 5 mit einem auf einer Welle oder einem Stab (30) befestigten Magnetring (1), mit einer Ringscheibe (10), deren Außenrand (11) von einer Magnetscheibe (2) umfasst wird und deren Innenrand (13, 14) zumindest abschnittsweise frei liegt, wobei der freiliegende Innenrand (13, 14) zumindest abschnittsweise auf einem Kreis liegt, dessen Durchmesser nur wenig kleiner ist als der Durchmesser des Stabes (30), **dadurch gekennzeichnet, dass** der Außenrand (11) der Ringscheibe (10) von magnetisierbarem Material über die Kanten des Außenrandes (11) hinweg umspritzt und dieses anschließend magnetisiert wird, wobei die Umspritzung des Außenrands (11) dermaßen erfolgt, dass der abschnittsweise frei liegende Innenrand (13, 14) ein federndes Befestigungselement zur Befestigung des Magnetringes (1) auf der Welle oder dem Stab (30) bildet.

## Claims

1. Sensor sensitive to a magnetic field having magnetic ring (1) mounted on an shaft or a rod including an annular disc (10) with an outer rim (11) embedded within a magnetic disc (2) and an inner rim (13, 14), at least in part, lying free with the inner rim, at least in part, being located on a circle with a diameter only little less than a diameter of the rod or shaft, **characterized in that** the magnetic disc (2) envelops the outer rim (11) of the annular disc (10) beyond its edges and that the annular disc (10) protrudes radially inwards from the enveloping by the magnetic disc (2) at least in part and that the protruding inner rim forms a spring like mounting element.

2. Sensor sensitive to a magnetic field according to claim 1, **characterized in that** the inner rim (13, 14) of the annular disc (10), except for two recesses (15, 16), forms a circle, with the sections (17, 18) of the inner rim disposed within the recesses (15, 16) being embedded within the magnetic disc (2).

3. Sensor sensitive to a magnetic field according to claim 2, **characterized in that** the recesses (15, 16) form segments based on the center of the annular disc (10).

4. Sensor sensitive to a magnetic field according to one of the foregoing claims, **characterized in that** the annular disc (10) is made of a non-magnetic material.

5. Sensor sensitive to a magnetic field according to claim 4, **characterized in that** the annular disc (10) is made of hard brass or a beryllium alloy.

6. Sensor sensitive to a magnetic field according to claim 1, **characterized in that** the inner rim of the annular disc (10) is disposed on a circle, and that the shaft (30) onto which the magnetic ring is forced, is provided with longitudinal bridges (32) forced out of the material of the shaft (30).

7. Method to manufacture a sensor sensitive to a magnetic field In a magnetic ring mountable on a shaft, including a magnetic ring (1) clamped on the circumference of a shaft or rod (30), with an annular disc (10) having an outer rim (11) embedded within a magnetic disc (2) and an inner rim (13, 14), at least in part, exposed externally of the magnetic disc, with the inner rim (13, 14) lying free, at least in part, being located on a circle with a diameter only little less than a diameter of a shaft (3), **characterized in that** the outer rim (11) of the annular disc (10) is produced by spray-coating the outer rim of the annular disc with a magnetizable material beyond the edges of the outer rim (11) and by subsequently magnetizing the material, whereby the spray-coating of the outer rim (11) in a way that the sector wise free protruding inner rim (13, 14) forms a spring like mounting element for mounting of the magnetic ring (1) on the shaft or the rod (30).

## Revendications

1. Sonde sensible aux champs magnétiques présentant un tore magnétique (1) fixé sur un arbre ou une tige (30), avec une plaque annulaire (10) dont le bord extérieur (11) est entouré d'un disque magnétique (2) et dont le bord intérieur (13, 14) est libre au moins sur certains fragments, le bord intérieur (13, 14) libre se trouvant, au moins par fragments, sur un cercle dont le diamètre est seulement légèrement inférieur à celui de la tige (30), **caractérisé en ce que** le disque magnétique (2) entoure le bord extérieur (11) de la plaque annulaire (10) au-delà de ses arêtes et **en ce que** la plaque annulaire (10) dépasse radialement vers l'intérieur au-delà du tour de la plaque annulaire au moins sur certains fragments, le bord intérieur restant libre constituant un élément de fixation à ressort.

2. Sonde sensible aux champs magnétiques selon la revendication 1, **caractérisée en ce que** le bord intérieur (13, 14) de la plaque annulaire (10), à l'exception de deux évidements (15, 16), forme un cercle, les fragments (16, 17) du bord intérieur qui se trouvent dans les évidements (15, 16) étant entourés par le disque magnétique (2).

3. Sonde sensible aux champs magnétiques selon la revendication 2, **caractérisée en ce que** les évidements forment des segments par rapport au centre de la plaque annulaire (10).

4. Sonde sensible aux champs magnétiques selon l'une quelconque des revendications précédentes, **caractérisée en ce que** la plaque annulaire (10) est réalisée dans un matériau non magnétique.

5. Sonde sensible aux champs magnétiques selon la revendication 4, **caractérisée en ce que** la plaque annulaire (10) est réalisée en laiton dur ou en un alliage de béryllium.

6. Sonde sensible aux champs magnétiques selon la revendication 1, **caractérisée en ce que** le bord intérieur de la plaque annulaire (10) se trouve sur un cercle et l'arbre (30) sur lequel est enfoncé le tore magnétique est doté de nervures longitudinales (32) qui sont pressées à partir du matériau de l'arbre (30).

7. Sonde sensible aux champs magnétiques selon l'une quelconque des revendications 1 à 5, présentant un tore magnétique fixé sur un arbre ou une tige (30), une plaque annulaire (10) dont le bord extérieur (11) est entouré par un disque magnétique (2) et dont le bord intérieur (13, 14) est libre, au moins sur certains fragments, le bord intérieur se trouvant, au moins par fragments, sur un cercle, dont le diamètre est seulement légèrement inférieur à celui de la tige (30), **caractérisé en ce que** le bord extérieur (11) de la plaque annulaire (10) est recouvert par extrusion d'un matériau magnétisable au-delà des arêtes du bord extérieur, puis ce matériau est magnétisé, l'extrusion du bord extérieur (11) étant réalisée de telle sorte que le bord intérieur (13, 14), restant libre sur certains fragments, constitue un élément de fixation à ressort pour fixer le tore magnétique (1) sur l'arbre ou la tige (30).
